# EUROPÄISCHE PATENTSCHRIFT

(11) **EP 2 498 007 B1**
(45) Veröffentlichungstag und Bekanntmachung des Hinweises auf die Patenterteilung: **16.11.2016**
(21) Anmeldenummer: 12001333.9
(22) Anmeldetag: 29.02.2012
(51) Int. Cl.: F24D 3/10, F24D 19/00, F16L 59/16, E03B 7/09

(54) **Wärmedämmvorrichtung für eine hydraulische Regelgruppe**
Thermal insulation device for a hydraulic control assembly
Dispositif d'isolation thermique pour un groupe de réglage hydraulique

(30) Priorität: 11.03.2011 DE 202011003874 U
(43) Veröffentlichungstag der Anmeldung: 12.09.2012
(73) Patentinhaber: Watts Industries Deutschland GmbH, 76829 Landau in der Pfalz (DE)
(72) Erfinder: Heribert, Hans, 67480 Edenkoben (DE); Dück, Johann, 67433 Neustadt (DE)
(74) Vertreter: Patentanwälte Dr. Keller, Schwertfeger

(56) Entgegenhaltungen:
- EP-A1- 0 561 037
- EP-A2- 2 306 098
- DE-A1-102005 014 869
- DE-U1- 9 411 684
- DE-U1-202010 012 172
- US-A- 4 449 554

## Beschreibung

Die vorliegende Erfindung betrifft eine Wärmedämmvorrichtung für eine hydraulische Regelgruppe mit Steuer- oder Regeleinheit und/oder Pumpeneinheit gemäß dem Oberbegriff des Anspruchs 1 wie beispielsweise aus der DE 94 11864 U1bekannt.

Hydraulische Regelgruppen umfassen üblicherweise einen Rohrabschnitt eines Vorlaufs und einen Rohrabschnitt eines Rücklaufs eines fluidführenden Rohrleitungssystems, Armaturen sowie teilweise eine Steuer- oder Regeleinheit und/oder eine Pumpeneinheit.

Aufgrund von Energieeinsparvorgaben ist es erforderlich, den Vor- und Rücklauf einer hydraulischen Regelgruppe gegen Wärmeverlust zu isolieren. Bei Regelgruppen, die aus einem Rohrabschnitt eines Vorlaufs, einen Rohrabschnitt eines Rücklaufs und einer Steuer - oder Regeleinheit und/oder einer Pumpeneinheit bestehen, wird dies beispielsweise bisher dadurch erzielt, dass die komplette Regelgruppe mit einer Isolierhaube versehen wird. Eine Isolierhaube hat den Vorteil, dass sie einfach zu montieren und demontieren ist, wenn beispielsweise ein Regelelement getauscht werden muss. Darüber hinaus bietet sie Berührungsschutz vor der Regelgruppe.

In der EP 0561 037 A1 wird eine Vorrichtung zur Versorgung eines Kreislaufes einer Wärme- oder Kälteversorgungsanlage beschreiben, bei der in einer Oberschale Durchbrechungen vorgesehen sind, um die für die Funktion einer Baugruppe wesentlichen Teile der Aggregate und Bedienelemente hindurchtreten zu lassen.

Bei der Verwendung von Regelelementen wie beispielsweise elektronische Regler oder Hocheffizienzpumpen besteht jedoch das Problem, dass diese im Betrieb warm oder von dem in den Rohrleitungen fließenden Fluid erwärmt werden. Aufgrund der die hydraulische Regelgruppe umgebenden Isolierhaube kann die Wärme, die in den elektronischen Geräten entsteht, nicht abgeführt werden. Dies führt dazu, dass ein elektronischer Regler bzw. eine Hocheffizienzpumpe überhitzen, fehlerhaft regeln und die Lebensdauer der Regler bzw. Hocheffizienzpumpe drastisch verkürzt ist.

Es ist Aufgabe der vorliegenden Erfindung eine Wärmedämmvorrichtung für hydraulische Regelgruppen bereitzustellen, die eine gute Wärmedämmung der fluidführenden Rohrleitungsabschnitte einer Regelgruppe bewirkt und die Überhitzung von elektronischen Regelelementen oder einer Pumpe in der hydraulischen Regelgruppe vermeidet, wobei die Wärmedämmvorrichtung einen Schutz der Regelgruppe bietet.

Erfindungsgemäß wird dies mit Hilfe einer Wärmedämmvorrichtung für eine hydraulische Regelgruppe gelöst umfassend eine Rückschale aus einem wärmeisolierenden Material, wenigstens ein Deckschalenelement aus einem wärmeisolierenden Material zur Isolierung von fluidführenden Rohrleitungsabschnitten der Regelgruppe und eine Abdeckhaube zum Bedecken der Regelgruppe, wobei die Abdeckhaube Belüftungsöffnungen aufweist,wobei das Deckschalenelement eine Aussparung für die Steuer- oder Regeleinheit und/oder die Pumpeneinheit aufweist und wobei die Steuer- oder Regeleinheit und/oder die Pumpeneinheit aus dem Deckschalenelement hervorragt.

Mit Hilfe der erfindungsgemäßen Wärmedämmvorrichtung lassen sich die fluidführenden Rohrleitungsabschnitte gezielt gegen Wärmeverluste dämmen, so dass die Erfordernisse einer gegebenen Energieeinsparverordnung erfüllt werden. Da die Steuer - oder Regeleinheit und/oder die Pumpeneinheit, insbesondere der Pumpenkopf, der hydraulischen Regelgruppe nicht mit einem wärmeisolierenden Material bedeckt sind, wird deren Überhitzen vermieden.

Die Abdeckhaube, die mit Belüftungsöffnungen versehen ist, vermeidet somit ein Überhitzen der Steuer - oder Regeleinheit und/oder der Pumpeneinheit der hydraulischen Regelgruppe, bietet einen Berührungsschutz der Regelgruppe und lässt sich optisch ansprechend gestalten.

Für eine einfache Montage oder Demontage zu Wartungszwecken ist es von Vorteil, dass die Abdeckhaube an der Rückschale oder an dem wenigstens einen Deckschalenelement befestigbar ist. Die Abdeckhaube kann beispielsweise aus einem Kunststoff, insbesondere aus einem tiefziehbaren Kunststoff oder geschäumtem Polypropylen (EPP), bestehen.

Für eine besonders gute Wärmedämmung ist es vorteilhaft, dass das Deckschalenelement und/oder die Rückschale für die Aufnahme von Bauteilen der Regelgruppe, insbesondere für die Aufnahme von fluidführenden Rohrleitungsabschnitten, profiliert ausgebildet sind. Hierbei kann die Deckschale beispielsweise Vertiefungen, Erhöhungen oder Aussparungen aufweisen, die an die Geometrie der Bauteile, insbesondere der fluidführenden Rohrleitungsabschnitte, der Regelgruppe angepasst sind.

Da bei den verschiedenen Einsatzbereichen einer hydraulischen Regelgruppe Vor- und Rücklauf unterschiedlich angeordnet sein können, ebenso wie die Pumpe oder ein Regler sowohl am Vorlauf oder am Rücklauf angeordnet sein können, ist es von Vorteil, dass das wenigstens eine Deckschalenelement wendbar ist. Somit können bei verschiedenen Bauformen einer Regelgruppe die gleichen Deckschalenelemente verwendet werden.

Bei einer bevorzugten Ausführungsform weist die Rückschale eine Vorrichtung zur Befestigung eines Reglers auf. Dies hat den Vorteil, dass die Kabelführung des Reglers über die Rückschale erfolgt und das Deckschalenelement abgenommen werden kann, ohne dass Kabel mit dem Deckschalenelement mitgeführt werden.

Weiterhin ist bevorzugt, dass das wenigstens eine Deckschalenelement einstückig ausgebildet ist. Dies ist für die Montage von Vorteil, da nur ein Deckschalenelement benötigt wird, um fluidführende Rohrleitungsabschnitte gegen Wärmeverlust zu schützen. Beispielsweise kann das Deckschalenelement C-förmig gestaltet sein und/oder eine Aussparung für ein Steuer- oder Regeleinheit und/oder die Pumpeneinheit aufweisen.

Vorteilhafte Ausführungsformen der Erfindung werden anhand der beigefügten Zeichnungen näher erläutert, in denen zeigen:
- Figur 1:: eine Regelgruppe mit einer Rückschale in zerlegter Darstellung;
- Figur 2:: eine teilweise eingebaute Wärmedämmvorrichtung mit abgenommener Abdeckhaube;
- Figur 3:: eine Rückseite der Rückschale;
- Figur 4:: die Rückschale mit einer alternativen Befestigungsvorrichtung;
- Figur 5:: ein Deckschalenelement und eine Rückschale in zerlegter Darstellung;
- Figur 6:: das Deckschalenelement der Figur 5 in Vorderansicht;
- Figur 7a, 7b:: ein oberes Deckschalenteil;
- Figur 8a, 8b:: ein mittleres Deckschalenteil;
- Figur 9a, 9b:: ein unteres Deckschalenteil;
- Figur. 10:: die Verwendung des oberen Deckschalenteils in einer Regelgruppe einer Solaranlage;
- Figur. 11:: die Verwendung des oberen Deckschalenteils in einer Regelgruppe einer Heizanlage;
- Figur 12a, 12b:: das in den Figuren 5 und 6 dargestellte Deckschalenelement in eingebautem Zustand mit abgenommener Abdeckhaube;
- Figur 13a, 13b, 13c:: Deckschalenteile in eingebautem Zustand;
- Figur 14:: eine Rückschale mit einem Regler;
- Figur 15a, 15b:: zwei Ausführungsformen einer Abdeckhaube im montiertem Zustand; und
- Figur 16a, 16b:: ein wendbares Deckschalenelement.

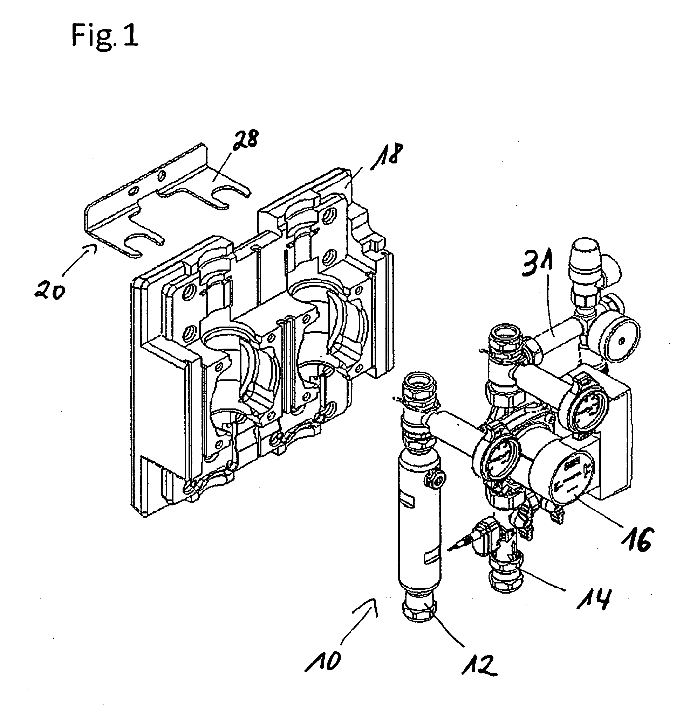

Figur 1 zeigt eine Regelgruppe 10 für eine Solarstation. Die Regelgruppe 10 umfasst einen Vorlauf 12, einen Rücklauf 14 und eine im Rücklauf 14 angeordnete Hochleistungspumpe 16. Weiterhin zeigt Figur 1 eine Rückschale 18 einer Wärmedämmvorrichtung und ein Befestigungsmittel 20 zum Befestigen der Rückschale 18 an einer Wand.

Die Rückschale 18 ist für eine im Wesentlichen passgenaue Aufnahme der Rohrleitungsabschnitte des Vorlaufs 12 und des Rücklauf 14 profiliert ausgebildet.

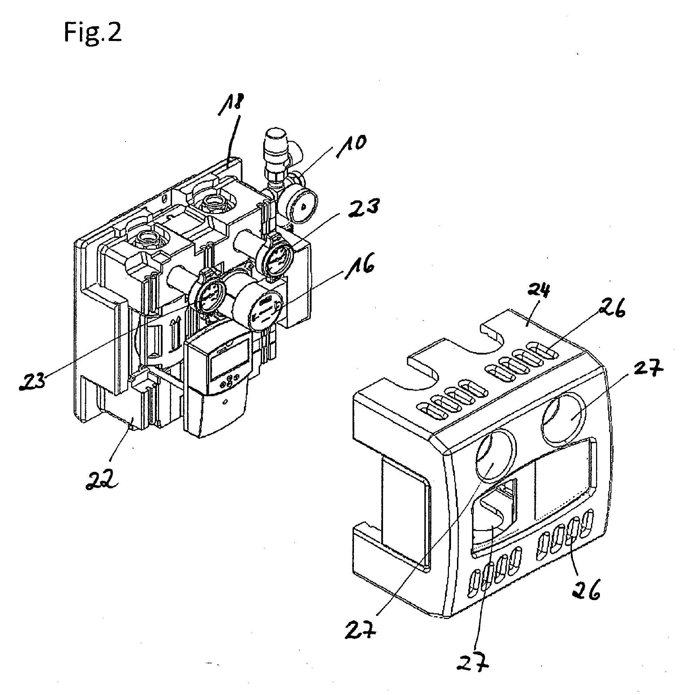

In Figur 2 ist die Rückschale 18 an der Rückseite der Regelgruppe 10 angeordnet und die Vorderseite der fluidführenden Rohrleitungsabschnitte des Vorlaufs 12 und des Rücklaufs 14 ist mit einem Deckschalenelement 22 der Wärmedämmvorrichtung bedeckt. Der Pumpenkopf der Pumpe 16 sowie Temperaturanzeigen 23 des Vorlaufs 12 und des Rücklaufs 14 ragen aus dem Deckschalenelement 22 hervor. Weiterhin ist in Figur 2 eine Abdeckhaube 24 zu erkennen. Die Abdeckhaube 24 ist an der Rückschale 18 befestigbar, indem das Deckschalenelement 22 auf die Rückschale 18 geklemmt wird. Sie weist an ihrer Oberseite und an der Vorderseite Belüftungsschlitze 26 auf. Weiterhin sind Öffnungen 27 für Messanzeigen der Regelgruppe 10 vorgesehen.

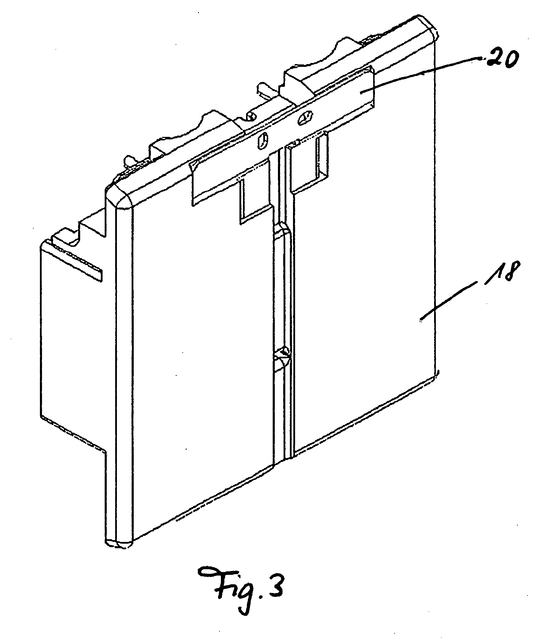

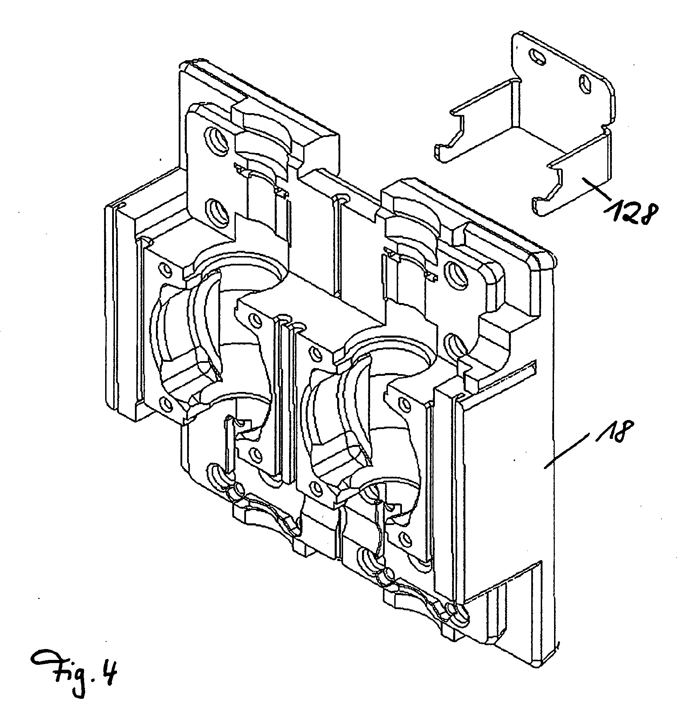

In Figur 3 ist die Rückseite der Rückschale 18 und das daran angeordnete Befestigungselement 20 erkennbar. Das Befestigungselement 20 ist an einer Wand befestigbar und weist Gabeln 28 (siehe Figur 1) auf, die in die Rückschale 20 eingreifen, um die Rückschale 20 zu halten. Figur 4 zeigt eine alternative Ausführungsform einer Gabel 128.

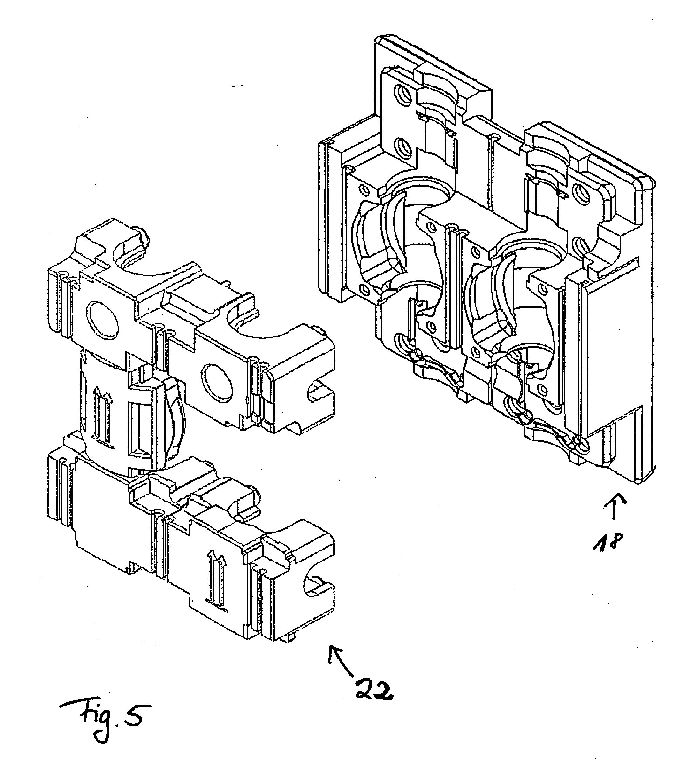

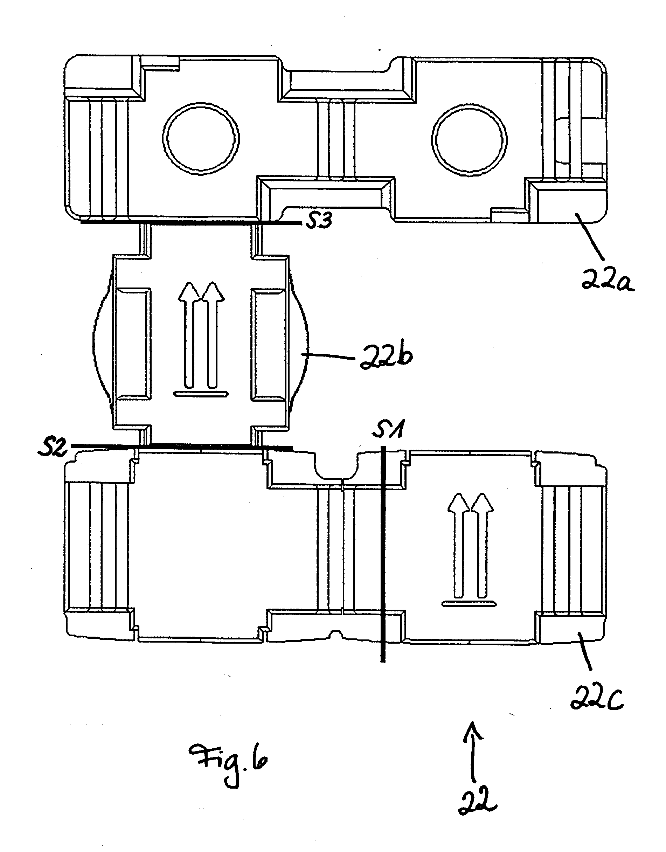

In den Fig. 5 und 6 ist das Deckschalenelement 22 dargestellt. Das Deckschalenelement 22 ist einstückig mit im Wesentlichen C-förmiger Grundform ausgebildet und weist einen oberen Abschnitt 22a, einen mittleren Abschnitt 22b und einen unteren Abschnitt 22c auf. Die Öffnung der C-fömigen Grundform entspricht einer Aussparung für die Pumpe 18. Weiterhin ist das Deckschalenelement 22 profiliert mit Hinterschneidungen, Vertiefungen und Vorsprüngen zur Aufnahme von Einzelelementen der Regelgruppe 10 ausgebildet.

Wie insbesondere in Fig. 6 zu erkennen ist, sind an dem einstückig ausgebildeten Deckschalenelement 22 Sollbruchstellen S1, S2, S3 vorgesehen, um das einstückige Deckschalenelement in einzelne Deckschalenteile zu zerlegen.

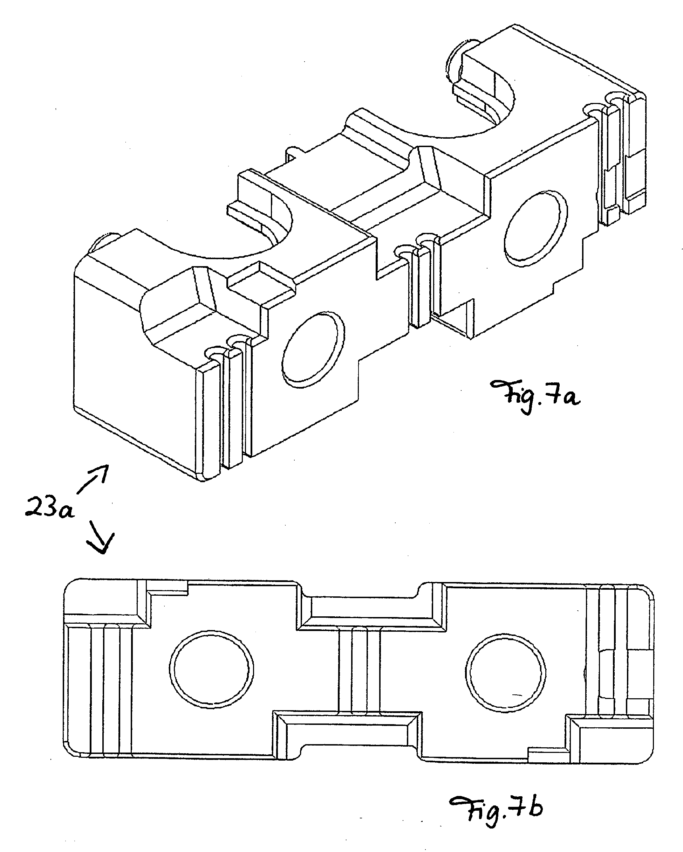

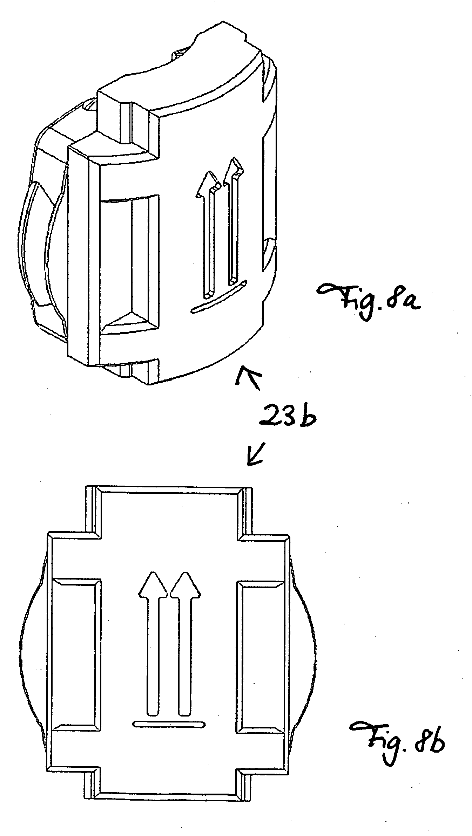

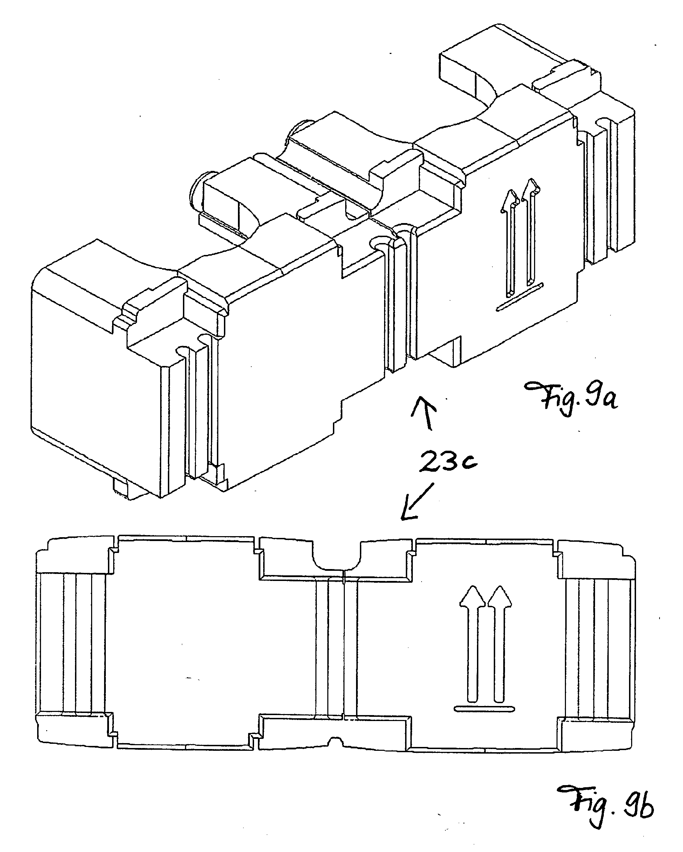

Die an den Sollbruchstellen S2 und S3 getrennten Deckschalenteile, nämlich oberes Deckschalenteil 23a, mittleres Deckschalenteil 23b und unteres Deckschalenteil 23b sind in den Figuren 7a, 7b, 8a, 8b und 9a, 9b dargestellt.

Da bei verschiedenen Regelgruppen der Vor- und Rücklauf vertauscht und eine Regel- oder Steuereinheit oder eine Pumpe 16 am Vorlauf oder Rücklauf angeordnet sein kann, sind die Deckschalenteile 23a, 23b und 23c so gestaltet, dass sie einzeln zu einer Deckschale kombinierbar sind, so dass sie die fluidführenden Rohrleitungsabschnitt im Wesentlichen vollständig bedecken. Somit reicht ein Satz an Deckschalenteilen 23a, 23b und 23c aus, um bei verschiedenen geometrischen Anordnungen einer Regelgruppe die fluidführenden Rohrleitungsabschnitte des Vorlaufs 12 oder Rücklaufs 14 im Wesentlichen vollständig abzudecken.

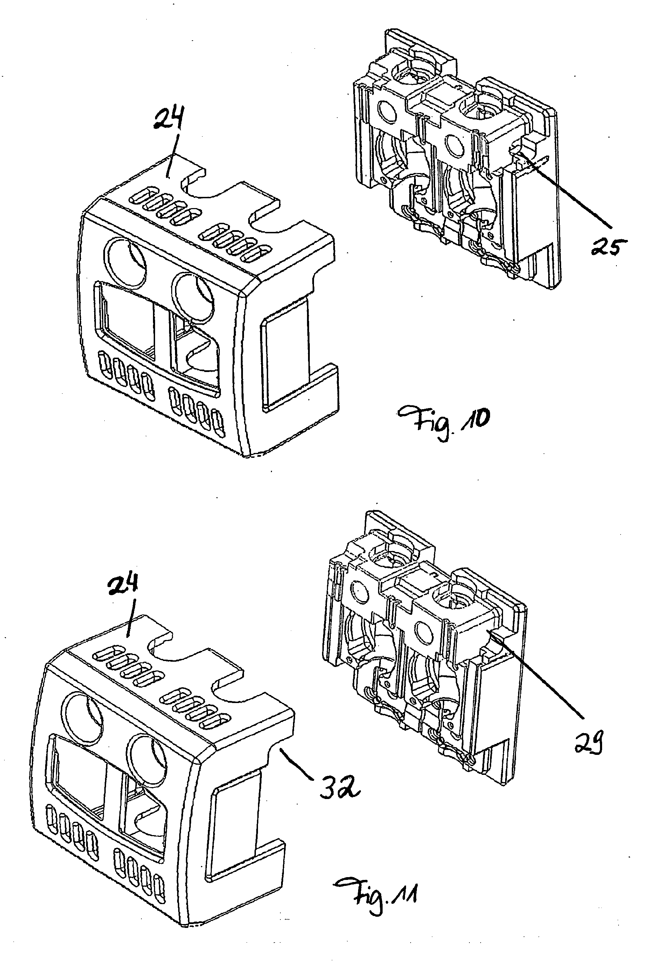

Das obere Deckschalenteil 23a ist darüber hinaus um seine Querachse wendbar gestaltet. Weiterhin weist das Deckschalenteil 23a eine Seitenfläche 25 mit einer Öffnung auf. Die der Seitenfläche 25 gegenüberliegende Fläche 29 ist geschlossen ausgebildet (siehe Figuren 10 und 11).

Wie in Figur 1 zu erkennen ist, weisen Regelgruppen 10 für Solaranlage häufig eine Sicherheitsgruppe 31 auf, die eine Öffnung des Deckschalenteils 23a und folglich auch eine Öffnung 32 der Abdeckhaube 24 benötigen. Figur 10 zeigt die Verwendung des Deckschalenteils für Regelgruppen von Solaranlagen. Bei Regelgruppen einer Heizanlage ist keine Sicherheitsgruppe und somit auch keine Öffnung des Deckschalenteils notwendig. Um auch für Regelgruppen einer Heizgruppe eine gute Wärmeisolierung zu erhalten, kann das Deckschalenteil 23c gewendet werden, so dass die Öffnung 32 in der Abdeckhaube 32 durch das Deckschalenteil 23c bedeckt ist. Die Verwendung des Deckschalenteils in einer Regelgruppe einer Heizgruppe ist in Fig. 11 gezeigt.

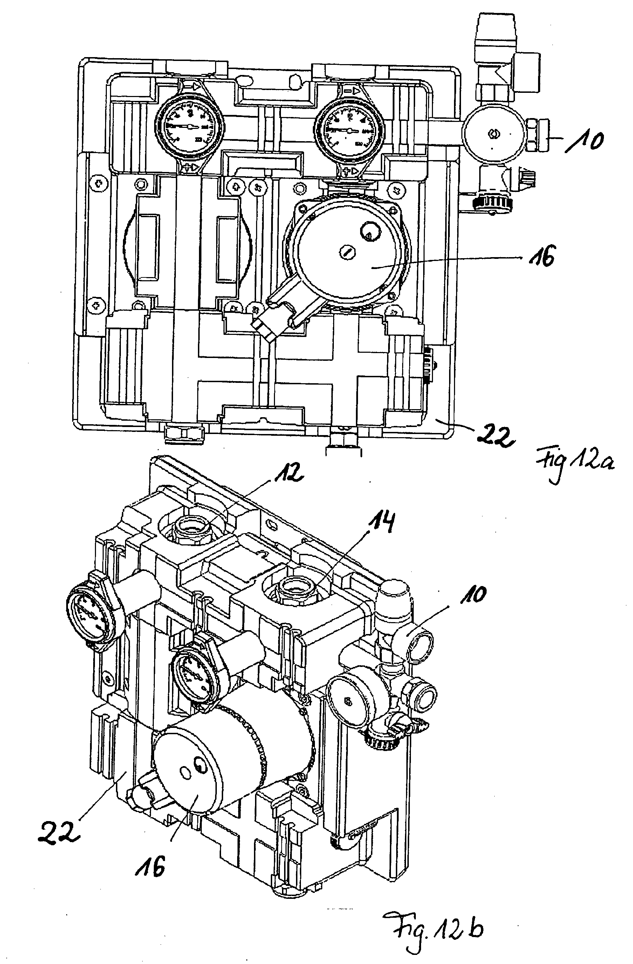

Die Figuren 12a und 12b zeigen das Deckschalenelement 22 im eingebauten Zustand. Das Deckschalenelement 22 bedeckt die fluidführenden Rohrleitungsabschnitte 12 und 14 der Regelgruppe 10 und der Pumpenkopf der Pumpe 16 ragt aus dem Deckschalenelement 22 hervor.

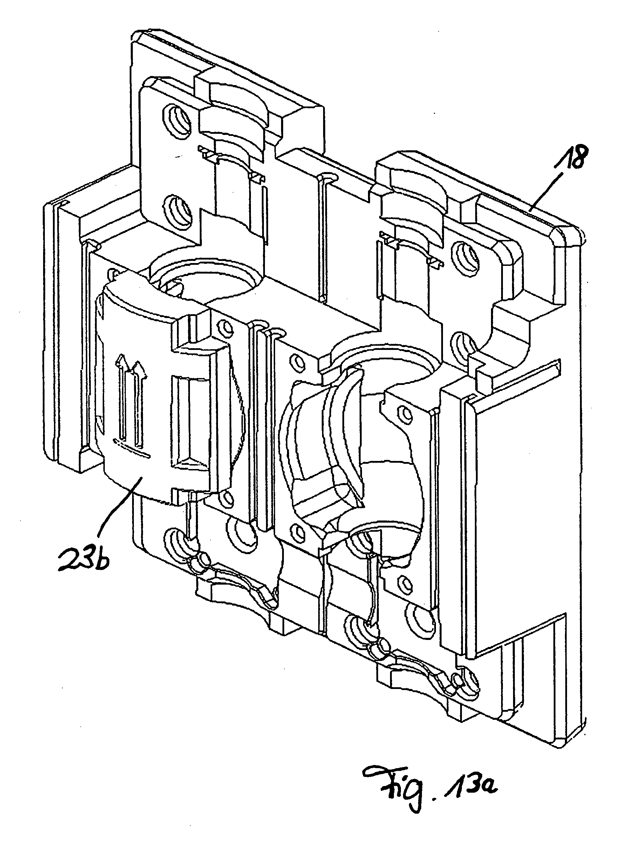

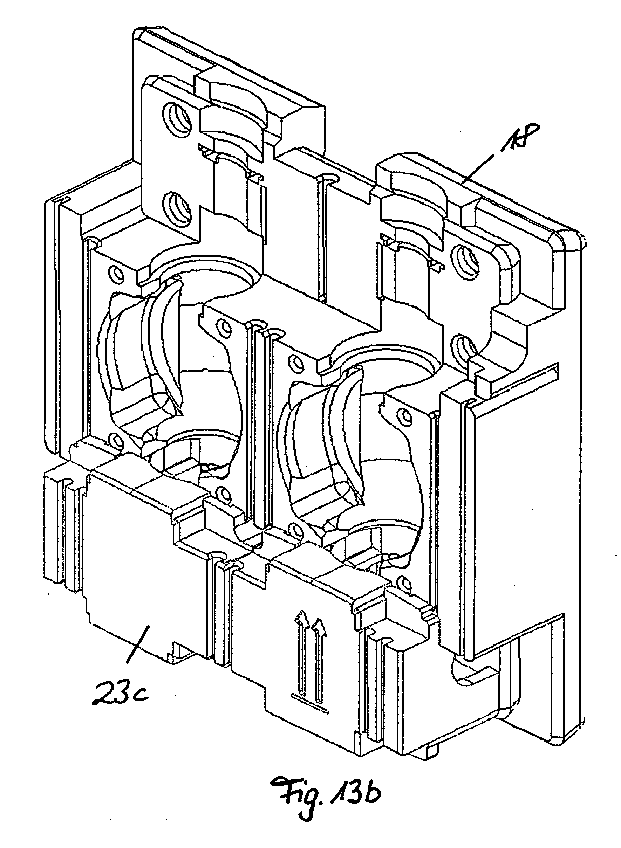

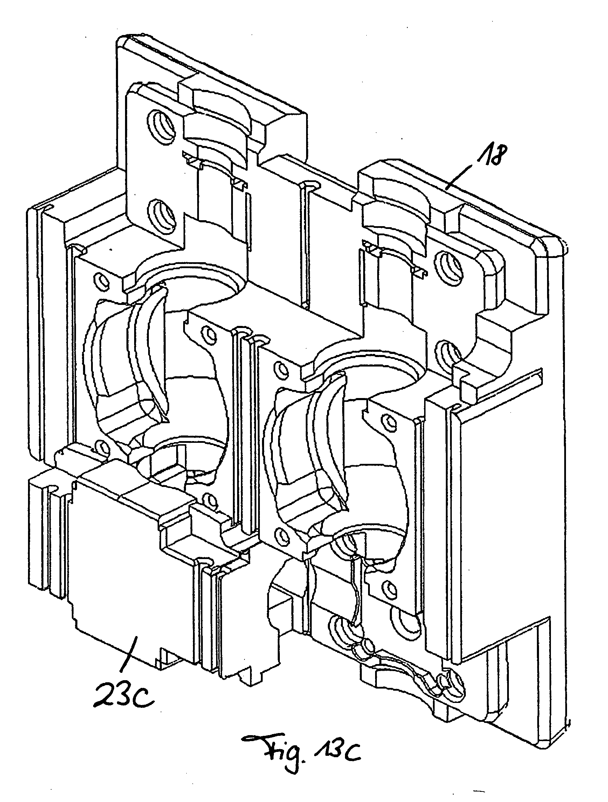

In den Figuren 13a, 13b und 13c sind verschiedene Einsatzmöglichkeiten der Deckschalenteile 23a, 23b, 23c gezeigt, wobei für den Einsatz des Deckschalenteils 23c dieses entlang der in Fig. 6 dargestellten Sollbruchstelle S1 getrennt ist.

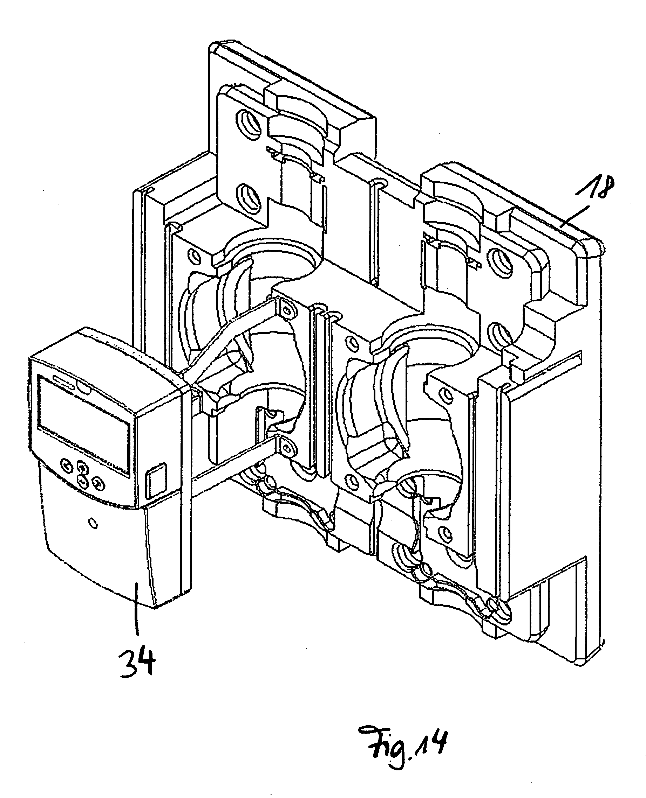

Figur 14 zeigt die Montage eines zusätzlichen Reglers 34 auf der Rückschale 18, wobei der Regler 34 an der Rückschale 18 befestigt ist.

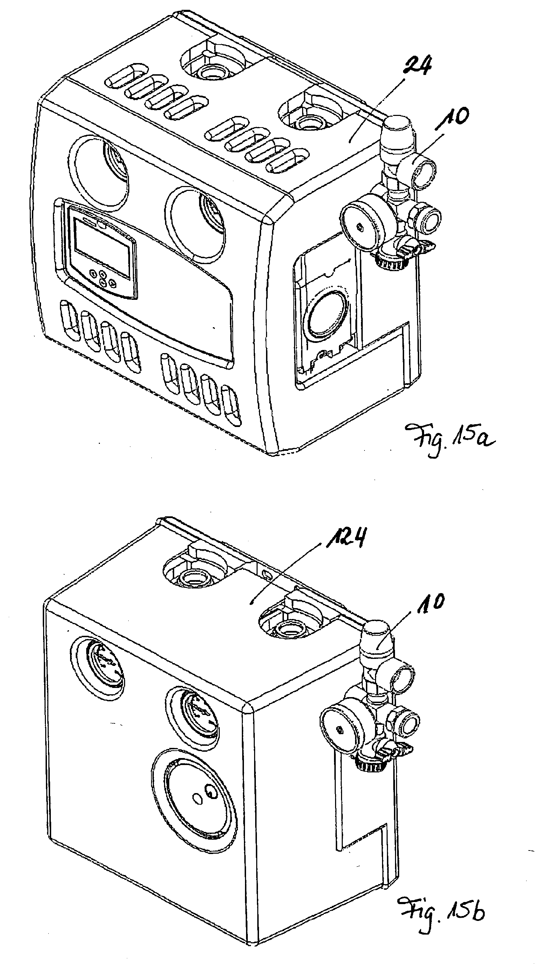

Figur 15a, 15b stellen die aus Rückschale 18, Deckschalenelement 22 und Abdeckhaube 24 bestehende Wärmedämmvorrichtung im montierten Zustand dar. Die Abdeckhauben 24 bzw.124 bedecken die Regelgruppe und das Deckschalenelement 22.

Für das Deckschalenelement 22 und die Rückschale 18 eignen sich als Materialen beispielsweise geschäumtes Polystyrol oder geschäumtes Polypropylen. Die Abdeckhaube 24, 124 kann aus einem tiefziehbaren Kunststoff oder auch aus geschäumtes Polystyrol oder geschäumtes Polypropylen hergestellt werden.

Wenn die Wärmedämmvorrichtung im Zusammenhang mit einer Regelgruppe für Solaranlagen beschrieben wurden, so kann jede beliebige Regelgruppe verwendet werden wie beispielsweise eine geregelte oder ungeregelte Heizkreisgruppe, eine Kesselladegruppe für Festwertkessel oder dergleichen.

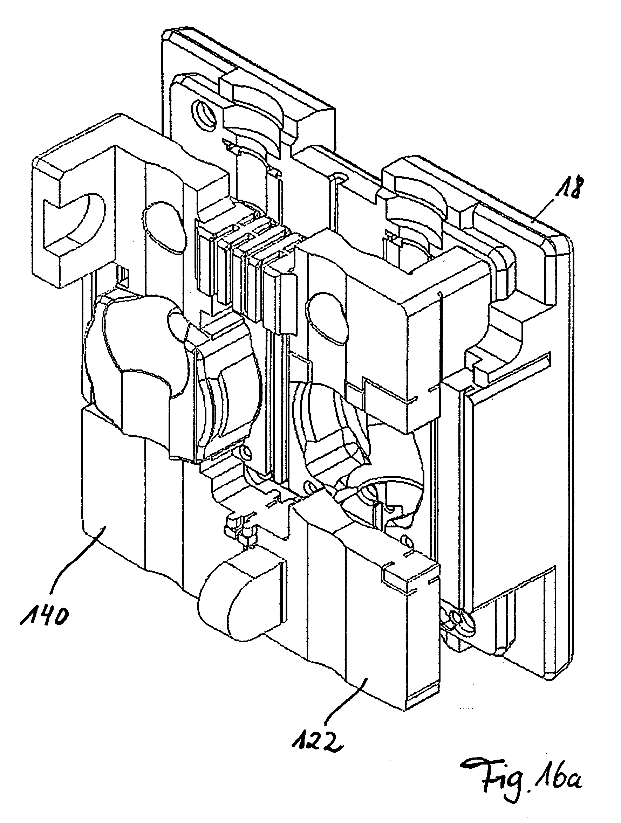

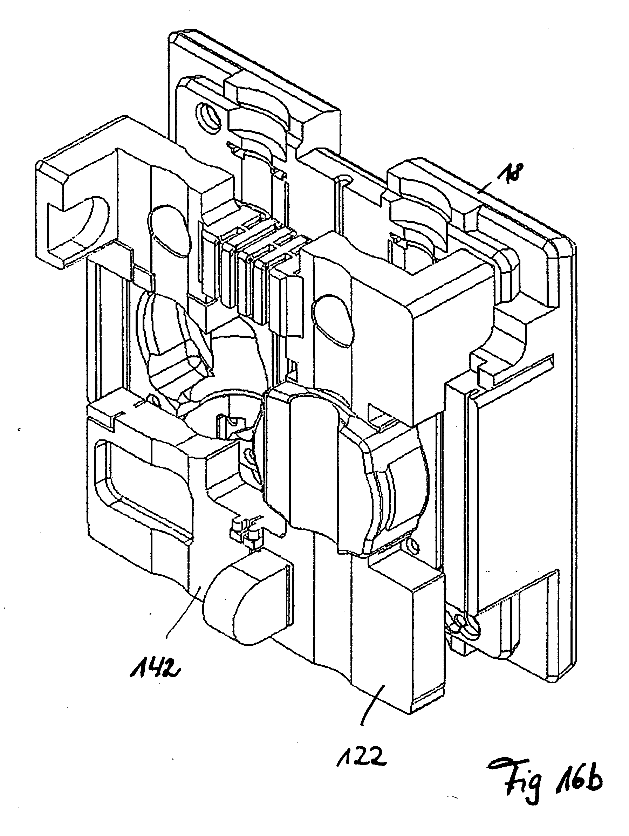

Bei einer in den Figuren 16a und 16b dargestellten Ausführungsform ist ein einstückig ausgebildetes Deckschalenelement 122 wendbar gestaltet. Die Figuren 16a und 16b zeigen jeweils die Vorderseite 140 bzw. die Rückseite 142 des Deckschalenelements 122. Dieses einstückige Deckschalenelement 122 ist sowohl für rechtsseitig oder linksseitig angeordnete Pumpen in einer Regelgruppe geeignet.

Da die in den Figuren 16a, 16b dargestellte Ausführungsform zerlegbar ist, sind auch das mittlere und das untere Deckschalenteil somit wendbar gestaltbar.

## Patentansprüche

1. Wärmedämmvorrichtung für eine hydraulische Regelgruppe mit einer Steuer- oder Regeleinheit und/oder einer Pumpeneinheit umfassend eine Rückschale (18) aus einem wärmeisolierenden Material, und wenigstens ein Deckschalenelement (22; 23a, 23b, 23c; 122) aus einem wärmeisolierenden Material zur Isolierung von fluidführenden Rohrleitungsabschnitten (12, 14) der Regelgruppe (10) **dadurch gekennzeichnet, dass** die Wärmedämmvorrichtung eine Abdeckhaube (24; 124) zum Bedecken der Regelgruppe (10) aufweist, wobei die Abdeckhaube (24; 124) Belüftungsöffnungen (26) aufweist, und das Deckschalenelement (22; 122) eine Aussparung für die Steuer- oder Regeleinheit und/oder die Pumpeneinheit aufweist und dass die Steuer- oder Regeleinheit und/oder die Pumpeneinheit aus dem Deckschalenelement (22; 122) hervorragbar ist.

2. Wärmedämmvorrichtung nach Anspruch 1, **dadurch gekennzeichnet, dass** die Abdeckhaube (24; 124) an der Rückschale (18) oder an dem wenigstens einen Deckschalenelement (22; 23a, 23b, 23c; 122) befestigbar ist.

3. Wärmedämmvorrichtung nach einem der vorhergehenden Ansprüche, **dadurch gekennzeichnet, dass** die Abdeckhaube (24; 124) aus einem Kunststoff ist.

4. Wärmedämmvorrichtung nach einem der vorhergehenden Ansprüche, **dadurch gekennzeichnet, dass** das wenigstens eine Deckschalenelement (22; 23a, 23b, 23c; 122) für die Aufnahme von Bauteilen der Regelgruppe, insbesondere für die Aufnahme von fluidführenden Rohrleitungsabschnitten (12, 14), profiliert ausgebildet ist.

5. Wärmedämmvorrichtung nach einem der vorhergehenden Ansprüche, **dadurch gekennzeichnet, dass** die Rückschale (18) für die Aufnahme von Bauteilen der Regelgruppe, insbesondere für die Aufnahme von fluidführenden Rohrleitungsabschnitten (12, 14), profiliert ausgebildet ist.

6. Wärmedämmvorrichtung nach einem der vorhergehenden Ansprüche, **dadurch gekennzeichnet, dass** das wenigstens eine Deckenschalenelement (23a; 122) wendbar ist.

7. Wärmedämmvorrichtung nach einem der vorhergehenden Ansprüche, **dadurch gekennzeichnet, dass** die Rückschale (18) eine Vorrichtung zur Befestigung eines Reglers (30) aufweist.

8. Wärmedämmvorrichtung nach einem der vorhergehenden Ansprüche, **dadurch gekennzeichnet, dass** das Deckschalenelement (22; 122) einstückig ausgebildet ist.

9. Wärmedämmvorrichtung nach Anspruch 8, **dadurch gekennzeichnet, dass** das Deckschalenelement (22; 122) im Wesentlichen eine C-förmige Grundform aufweist.

10. Wärmedämmvorrichtung nach Anspruch 8 oder 9, **dadurch gekennzeichnet, dass** das Deckschalenelement (22; 122) eine Aussparung für ein Regelelement, insbesondere für eine Pumpe (16), aufweist.

## Claims

1. Thermal insulation device for a hydraulic control assembly, comprising a control unit and/or a pump unit comprising a rear shell (18) made of a thermally insulating material and at least one cover shell element (22; 23a, 23b, 23c; 122) made of a thermally insulating material in order to insulate fluid-conducting pipe portions (12, 14) of the control assembly (10), **characterised in that** the thermal insulation device has a covering hood (24; 124) for covering the control assembly (10), the covering hood (24; 124) having ventilation openings (26) and the cover shell element (22; 122) having a recess for the control unit and/or the pump unit and **in that** the control unit and/or the pump unit is protrudable from the cover shell element (22; 122).

2. Thermal insulation device according to claim 1, **characterised in that** the covering hood (24; 124) is attachable to the rear shell (18) or to the at least one cover shell element (22; 23a, 23b, 23c; 122).

3. Thermal insulation device according to any of the preceding claims, **characterised in that** the covering hood (24; 124) is made of plastic material.

4. Thermal insulation device according to any of the preceding claims, **characterised in that** the at least one cover shell element (22; 23a, 23b, 23c; 122) is designed in a profiled manner in order to accommodate components of the control assembly, in particular to accommodate fluid-conducting pipe portions (12, 14).

5. Thermal insulation device according to any of the preceding claims, **characterised in that** the rear shell (18) is designed in a profiled manner in order to accommodate components of the control assembly, in particular to accommodate fluid-conducting pipe portions (12, 14).

6. Thermal insulation device according to any of the preceding claims, **characterised in that** the at least one cover shell element (23a; 122) is reversible.

7. Thermal insulation device according to any of the preceding claims, **characterised in that** the rear shell (18) comprises a device for attaching a controller (30).

8. Thermal insulation device according to any of the preceding claims, **characterised in that** the cover shell element (22; 122) is formed in one piece.

9. Thermal insulation device according to claim 8, **characterised in that** the cover shell element (22; 122) substantially has a basic C-shape.

10. Thermal insulation device according to either claim 8 or claim 9, **characterised in that** the cover shell element (22; 122) has a recess for a control element, in particular for a pump (16).

## Revendications

1. Dispositif d'isolation thermique pour un groupe de régulation hydraulique avec une unité de commande ou de régulation et/ou une unité de pompage comprenant une coque arrière (18) dans un matériau isolant thermiquement et au moins un élément formant coque de recouvrement (22 ; 23a, 23b, 23c ; 122) dans un matériau isolant thermiquement pour l'isolation de tronçons de tuyauterie (12, 14) conduisant un fluide du groupe de régulation (10), **caractérisé en ce que** le dispositif d'isolation thermique présente une coiffe de protection (24 ; 124) pour recouvrir le groupe de régulation (10), la coiffe de protection (24 ; 124) présentant des ouvertures d'aération (26) et l'élément formant coque de recouvrement (22 ; 122) présentant un évidement pour l'unité de commande ou de régulation et/ou l'unité de pompage, et que l'unité de commande ou de régulation et/ou l'unité de pompage peut dépasser de l'élément formant coque de recouvrement (22 ; 122).

2. Dispositif d'isolation thermique selon la revendication 1, **caractérisé en ce que** la coiffe de protection (24 ; 124) peut être fixée à la coque arrière (18) ou audit au moins un élément formant coque de recouvrement (22 ; 23a, 23b, 23c ; 122).

3. Dispositif d'isolation thermique selon l'une des revendications précédentes, **caractérisé en ce que** la coiffe de protection (24 ; 124) est en matière plastique.

4. Dispositif d'isolation thermique selon l'une des revendications précédentes, **caractérisé en ce que** ledit au moins un élément formant coque de recouvrement (22 ; 23a, 23b, 23c ; 122) est réalisé de manière profilée pour la réception de composants du groupe de régulation, en particulier pour la réception de tronçons de tuyauterie (12, 14) conduisant un fluide.

5. Dispositif d'isolation thermique selon l'une des revendications précédentes, **caractérisé en ce que** la coque arrière (18) est réalisée de manière profilée pour la réception de composants du groupe de régulation, en particulier pour la réception de tronçons de tuyauterie (12, 14) conduisant un fluide.

6. Dispositif d'isolation thermique selon l'une des revendications précédentes, **caractérisé en ce que** ledit au moins un élément formant coque de recouvrement (23a ; 122) est réversible.

7. Dispositif d'isolation thermique selon l'une des revendications précédentes, **caractérisé en ce que** la coque arrière (18) présente un dispositif pour la fixation d'un régulateur (30).

8. Dispositif d'isolation thermique selon l'une des revendications précédentes, **caractérisé en ce que** l'élément formant coque de recouvrement (22 ; 122) est réalisé d'une seule pièce.

9. Dispositif d'isolation thermique selon la revendication 8, **caractérisé en ce que** l'élément formant coque de recouvrement (22 ; 122) présente une forme de base sensiblement en C.

10. Dispositif d'isolation thermique selon la revendication 8 ou 9, **caractérisé en ce que** l'élément formant coque de recouvrement (22 ; 122) présente un évidement pour un élément de régulation, en particulier pour une pompe (16).
